# EUROPÄISCHE PATENTANMELDUNG

(11) **EP 1 944 675 A1**
(43) Veröffentlichungstag der Anmeldung: **16.07.2008**
(21) Anmeldenummer: 07024084.1
(22) Anmeldetag: 12.12.2007
(51) Int. Cl.: G05G 1/62, B60N 2/46

(54) **Halterung für ein Bedienelement oder Richtgriff insbesondere eines fernbedienbaren Waffensystems in einem Kampffahrzeug**

(30) Priorität: 15.01.2007 DE 102007002870
(71) Anmelder: Rheinmetall Landsysteme GmbH, 24107 Kiel (DE)
(72) Erfinder: Waßmuth, Andreas, 34128 Kassel (DE); Schmidt, Dieter, 34277 Fuldabrück (DE)
(74) Vertreter: Dietrich, Barbara

(57) **Zusammenfassung**

Halterung (1) für ein Bedienelement (2), wobei das Bedienelement (2) am vorderen Teil (1.1) der Halterung (1) angebracht ist, die Halterung (1) über eine höhenverstellbare Armauflage (3) verfügt und die Halterung (1) an einem Sitz (10), einem Dach, Boden oder Radkasten befestigt ist. Dabei kann die Armauflage (3) zusammen mit dem Bedienelement (2) zumindest in ihrem vorderen Teil (1.1) mit Hilfe eines Gelenkes (4) um selbiges verschwenkt werden. Das Verschwenken erfolgt von einer Arbeitsposition in eine Ruheposition und zurück. Die Armauflage (3) kann selber auch höhenverstellt werden.

## Beschreibung

Die Erfindung betrifft eine Halterung für einen Richtgriff oder einen Joystick (Bedienelement allgemein) für eine fernbedienbare Waffe, die auf/an einem Fahrzeug, wie beispielsweise Kampffahrzeug, angebracht ist.

Ein Transportfahrzeug mit einer fernbedienbaren Lafette ist aus der DE 199 27 656 A1 bekannt. Die zur Fernbedienung erforderliche Energie und elektrischen Signale werden über einen Schleifring in den Schartenturm übertragen.

Zur Steuerung von Waffensystemen werden in der Praxis Richtgriffe, Handbedienteile oder joystickartige Bedienelemente verwendet. Diese dienen als Schnittstelle zwischen Waffenbediener und Waffensystem.

Mit der EP 0 878 66 B1 (DE 698 16 907 T2) wird ein Waffensteuerungssystem mit Waffenstabilisierung beschrieben, welches eine Fernbedienung mit einem Display und einem Handbedienteil zur betrieblichen Steuerung des Waffensteuerungssystems aufweist. Diese Fernbedieneinheit wird dazu an der Rückseite des Fahrersitzes befestigt und so angeordnet, dass sie durch einen hinter einem Fahrer sitzenden Besatzungsmitglied bedienbar ist. Vorgesehen ist die Nutzung einer Querhalterung, die in Kniehöhe der Bedienperson angeordnet ist.

Bekannt sind auch Handbedienteile oder Joysticks, die in der vorderen Fahrzeugarmatur oder in Mittelkonsolen eines Fahrzeuges eingebunden sind. Derartige Lösungen finden auch in Kampffahrzeugen Anwendung, da hier häufig Durchgänge freizuhalten sind. Damit beispielsweise ein Bediener für ein Waffensystem eine hohe Steuergenauigkeit und Steuergeschwindigkeit erreichen kann, ist eine ergonomisch günstige Anordnung der Bedienelemente von Vorteil.

Hier stellt sich die Erfindung die Aufgabe, eine Halterung für einen Richtgriff oder ein Bedienelement zur Fernsteuerung eines Waffensystems oder anderen fernsteuerbaren Systems insbesondere in einem Kampffahrzeug aufzuzeigen, die es ermöglicht, ein ermüdungsfreies Steuern dieses Systems zu realisieren.

Gelöst wird die Aufgabe durch die Merkmale des Patentanspruchs 1. Vorteilhafte Ausgestaltungen sind in den Unteransprüchen aufgezeigt.

Der Erfindung liegt die Idee zugrunde, den Richtgriff für die Steuerung eines Waffensystems oder dergleichen an eine insbesondere verschwenkbare, eine Armlehne enthaltende Halterung anzubinden.

In einer ersten Variante wird die Halterung an einen Kampffahrzeugsitz angebaut und bildet eine Armlehne des Fahrzeugsitzes nach.

Die Anordnung von Bedienelementen an Armlehnen als solches ist bereits bei Arbeitsmaschinen (DE 10 2004 052 757 A1), bei Kraftfahrzeugen (DE 10 2005 033 028 B3) sowie bei Traktoren (http://www.fendt.com/download/063581 FE 900 DE Internet.pdf) bekannt. Diese Anordnungen zielen jedoch nicht auf die Bedienung insbesondere eines Waffensystems oder einer anderen Steuerung ab, bei welcher Richtgriff und Richtgriffhalter den Bewegungsraum des (Waffen-)Bedieners nicht einschränken dürfen und trotz Vorhandensein im Bewegungsbereich des Bedieners ein schnelles Verlassen des Bedienplatzes ermöglichen müssen.

Aufgrund der räumlichen Begebenheiten und den Anforderungen, dass Durchgänge freizuhalten sind, wird der Richtgriffhalter mit der Halterung vorzugsweise direkt am Bedienersitz befestigt. Ist die Bedienung durch den Kommandanten vorgesehen, wird die Halterung mit Bedienelement am Kommandantensitz befestigt.

Der Sitz kann in seiner Höhe verstellt werden, wobei angestrebt wird, dass sich Richtgriffhalter und Richtgriff mitbewegen. Dies ermöglicht den Waffenbedienern trotz unterschiedlicher Körpergrößen eine universelle ergonomisch günstige und ermüdungsfreie Sitzhaltung zu schaffen.

Aber auch eine schwenkbare Einbindung an der Decke, am Boden oder wenn vorgesehen am Radkasten ist eine der möglichen Alternativen zur fest am Sitz angebrachten Halterung mit Bedienelement.

Die Halterung selbst besitzt bevorzugt eine verstellbare Armauflage, durch die ein ermüdungsfreies Bedienen des Richtgriffes realisiert wird, und kann zumindest im vorderen Teil, an dem der Richtgriff montiert ist, in eine so genannte Arbeitsposition und Ruheposition verbracht bzw. verschwenkt werden. In diesen Positionen ist sie mit Hilfe einer Gasdruckfeder fixierbar, die auch das Schwenken in diese unterstützt. Aber auch ein Verschwenken der gesamten Halterung in die Arbeitsposition und Ruheposition ist denkbar.

Der Vorteil der Einbindung des Bedienelementes in eine Halterung mit Armlehne liegt speziell darin, dass die Bewegungsfreiheit des Waffenbedieners kaum eingeschränkt wird und das Verlassen des Bedienplatzes durch Verschwenken der Halterung bzw. Armlehne ermöglicht wird. Zudem wird ein eventuell vorhandener Durchgang zwischen Fahrer-/Bedienerraum und/oder Mannschafts-/Arbeitsraum auch von der verschwenkten Armlehne frei gehalten. Der Richtgriff als auch die Halterung dafür kann ergonomisch günstig angeordnet und angepasst werden. Zudem zeichnet sich die Halterung durch ein geringes Gewicht und eine einfache Montage aus. Für den Fall, dass die Steuerung selbst nicht benötigt wird, kann diese samt Halterung in die Schwenkposition verbracht werden und wirkt sich dadurch nicht störend bei den anderen Bedienungen im Fahrzeug aus.

Anhand eines Ausführungsbeispiels mit Zeichnung soll die Erfindung näher erläutert werden. Es zeigt:
- Fig. 1: einen Richtgriffhalter am Sitz befestigt,
- Fig. 2: die Halterung aus Fig. 1 mit einem Bediener,
- Fig. 3: die Halterung in Arbeitsposition,
- Fig. 4: die Halterung in Ruheposition,
- Fig. 5: eine Höhenverstellung der Armauflage der Halterung.

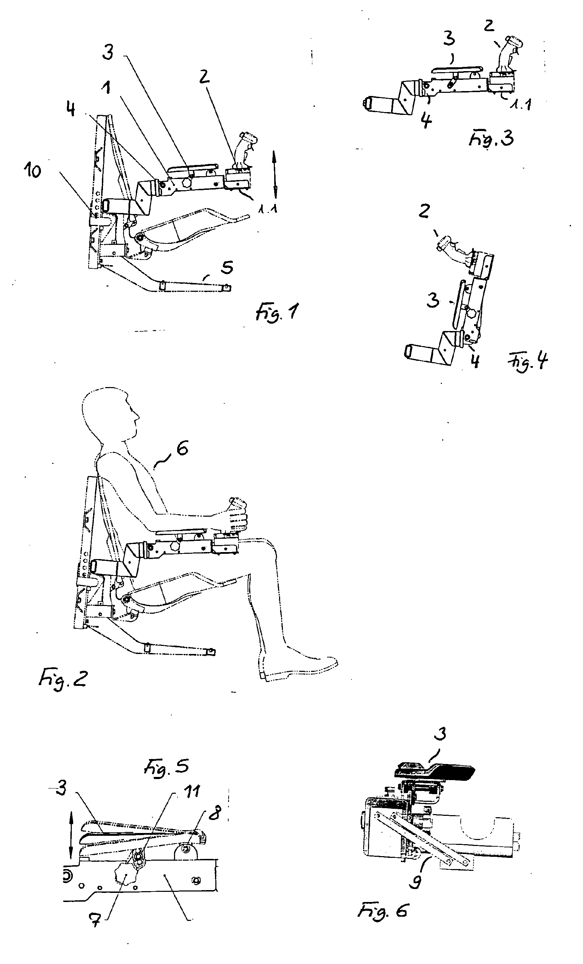

Fig. 1 zeigt einen Sitz 10 mit einer daran befestigten Halterung 1 (Fig. 3), an welcher im vorderen Teil 1.1 ein Bedienelement 2, hier ein so genannter Richtgriff, angebracht ist. Die Halterung 1 verfügt über eine verstellbare Armauflage 3 und ist zumindest mit dem vorderen Teil 1.1 mit Hilfe eines Gelenkes 4 um selbiges verschwenkbar. Der Sitz 10 ist durch Mittel 5 höhenverstellbar.

Der Richtgriff 2 ist Bestandteil einer nicht näher dargestellten Waffensteuerung oder anderen Steuerung und wirkt mit dieser als Bedienteil funktional zusammen.

In Fig. 2 ist die Halterung 2 als auch die Armauflage 3 ergonomisch an eine Bedienperson 6 angepasst dargestellt.

Fig. 3 zeigt die Halterung 2 in der Arbeitsposition, Fig. 4 in einer so genannten Ruheposition. In diese wird in der Regel dann eingeschwenkt, wenn ein Ein- oder Aussteigen des Bedieners 6 vorgesehen ist, wenn der Bediener 6 die Waffensteuerung nicht benötigt oder auch aus anderen Gründen das Vorhandensein der Halterung 2 nicht erwünscht ist.

In Fig. 5 ist eine mögliche Ausführung für die Verstellung der Armauflage 3 aufgezeigt. Die Höhenverstellung 11 kann mit Hilfe einer Sterngriffschraube 7 oder dergleichen um ein Lager 8 erfolgten.

Bei einer schwenkbaren Anbindung an der Decke oder dergleichen kann selbige Ausführungsform Anwendung finden.

Ein Versenken oder Klappen der Halterung 1 ist auch mit Hilfe eines Parallelogrammgestänges 9 möglich (Fig. 6). Auch hierbei bietet sich ein Versenken bzw. Klappen der gesamten Halterung 1 an.

Des Weiteren kann an dieser klappbaren Halterung 1 auch ein Monitor oder Display befestigt werden. Alternativ ist eine Anbringung am Fahrzeugchassis vorgesehen.

## Patentansprüche

1. Halterung (1) für ein Bedienelement (2) insbesondere für ein fernbedienbares Waffensystems oder eine andere Steuerung, wobei
- das Bedienelement (2) am vorderen Teil (1.1) der Halterung (1) angebracht ist,
- die Halterung (1) über eine höhenverstellbare Armauflage (3) verfügt und
- die Halterung (1) an einem Sitz (10), einem Dach, Boden oder Radkasten befestigt ist.

2. Halterung nach Anspruch 1, **dadurch gekennzeichnet, dass** die Armauflage (3) zusammen mit dem Bedienelement (2) zumindest in ihrem vorderen Teil (1.1) mit Hilfe eines Gelenkes (4) um selbiges verschwenkt werden kann.

3. Halterung nach Anspruch 2, **dadurch gekennzeichnet, dass** das Verschwenken von einer Arbeitsposition in eine Ruheposition und zurück erfolgen kann.

4. Halterung nach einem der Ansprüche 1 bis 3, **dadurch gekennzeichnet, dass** der Sitz (10) durch Mittel (5) höhenverstellbar ist.

5. Halterung nach einem der Ansprüche 1 bis 4, **dadurch gekennzeichnet, dass** die Höhenverstellung der Armauflage (3) mit Hilfe einer Sterngriffschraube (7) oder dergleichen um ein Lager (8) erfolgt.

6. Halterung nach einem der Ansprüche 1 bis 5, **dadurch gekennzeichnet, dass** ein Verschwenken durch eine Gasdruckfeder unterstützt wird und mit Hilfe dieser ein Fixieren in den Positionen ermöglicht werden kann.

7. Halterung nach einem der Ansprüche 1 bis 5, **dadurch gekennzeichnet, dass** ein Versenken oder Klappen der Halterung (1) durch ein Parallelogrammgestänge (9) erfolgt.
